# EUROPEAN PATENT APPLICATION

(11) **EP 1 179 444 A2**
(43) Date of publication of application: **13.02.2002**
(21) Application number: 01118977.6
(22) Date of filing: 06.08.2001
(51) Int. Cl.: B60K 15/03, B60K 15/04

(54) **Opening structure of a fuel tank**

(30) Priority: 07.08.2000 JP 2000237980; 22.05.2001 JP 2001153250
(71) Applicant: Horie Kinzoku Kogyo Kabushiki Kaisha, Aichi-ken 471-8510 (JP)
(72) Inventor: Goto, Teijiro, Toyota-shi, Aichi-ken,471-8510 (JP); Ishikawa, Takuya, Toyota-shi, Aichi-ken,471-8510 (JP); Takashima, Tatsutoshi, Toyota-shi, Aichi-ken,471-8510 (JP)
(74) Representative: Pellmann, Hans-Bernd, Dipl.-Ing.

(57) **Abstract**

The present invention is directed to an opening structure of a fuel tank having a fuel tank wall (1) made of a plurality of plastic layers with an opening portion (1h) formed to be integral with the fuel tank wall. The opening structure includes a cylindrical portion (1e) extended from the opening portion outward of the fuel tank wall, an overlapping portion (1d) extended from an end of the cylindrical portion to enlarge the diameter of the opening portion and bent at a bent portion (1b) to form an outer surface parallel with an opening end surface of the opening portion, and a compressed portion (1c) with at least a portion of the overlapping portion compressed in a direction perpendicular to the opening end surface of the opening portion. The opening structure may further include an annular member (2) which is disposed around the opening portion to be in contact with the overlapping portion and the cylindrical portion. The plastic layers may include at least an outer layer, an inner layer and an intermediate layer, and the outermost end of the intermediate layer may be positioned at the compressed portion.

## Description

### BACKGROUND OF THE INVENTION

### 1. Field of the Invention

The present invention relates to an opening structure of a fuel tank, more particularly the opening structure of the fuel tank for use in an automotive vehicle. Also, the present invention relates to a method for producing the fuel tank by forming a fuel tank wall with a plurality of plastic layers through blow molding, and forming an opening portion to be integral with the fuel tank wall.

### 2. Description of the Related Arts

Recently, a fuel tank mounted on an automobile or the like is likely to be made from plastic material. For example, getting popular now is a method for forming a fuel tank by the plastic material through blow molding, and forming an opening portion to be integral with the fuel tank wall. As a result, a plastic fuel tank having an opening portion of a desired structure is getting popular. The structure of the opening portion of the fuel tank as described above is disclosed in Japanese Utility-model Laid-open Publication No.4-7925, for example. In FIG.3 of that Publication, disclosed is a prior structure, and in FIG.1, a proposed structure for restraining the height of an opening peripheral wall of the fuel tank. According to the Publication, it is described that engaging portions such as nuts are disposed on a base portion for mounting a cover member thereon, and engaging parts such as bolts are engaged with the engaging portions to secure the cover member to a fuel tank body, or fuel tank wall, so that a sufficient capacity can be obtained in a condition of a limited total height. Also disclosed in Japanese Patent No.2906701 is the structure similar to that disclosed in the above Publication as a prior art.

With respect to the plastic material forming the fuel tank, a plastic member having a plurality of layers is disclosed in Japanese Utility-model Laid-open Publication No.61-83509, for example. In this Publication, disclosed is a blow molded fuel tank with multiple layers, employing multiple plate members with a plurality of component plates adhered together through binding layers.

When the plastic made fuel tank is produced as disclosed in the above Publication No.61-83509, a plastic member having a plurality of layers is employed. This plastic member includes a strength holding member such as high density polyethylene for holding the strength of the fuel tank, a barrier member for protecting the fuel from passing through it, and binding material or the like for binding them. By forming that plastic member through a blow molding method, the fuel tank is produced, together with its opening portion formed simultaneously. When the opening portion is covered by the cover member as disclosed in the aforementioned Publication, the end surface of the opening portion with a plurality of layers may be exposed inside of the fuel tank. In this case, therefore, the fuel might be leaked from the strength holding member of the outermost layer of the plastic member. In the Publication No.4-7925 as described above, it is proposed to connect them by means of a connecting member such as a bolt or the like, with a packing disposed between them. When connecting the cover member with the fuel tank, however, the bolt and the packing of high sealing property will be needed. In this case, even if the packing with a good anti-passing property is employed, there might be caused the leak of fuel through the outermost layer of the plastic member.

### SUMMARY OF THE INVENTION

Accordingly, it is an object of the present invention to provide an opening structure of a fuel tank having a fuel tank wall made of a plurality of plastic layers, to protect the fuel from passing through the plastic member at an opening portion of the fuel tank, effectively.

It is another object of the present invention to provide a method for forming a fuel tank wall with a plurality of plastic layers through blow molding, and forming an opening portion to be integral with the fuel tank wall, to produce a fuel tank having an opening structure to protect the fuel from passing through the plastic member, effectively.

In accomplishing the above and other objects, an opening structure of a fuel tank having a fuel tank wall made of a plurality of plastic layers with an opening portion formed to be integral with the fuel tank wall. The opening structure includes a cylindrical portion extended from the opening portion outward of the fuel tank wall, an overlapping portion extended from an end of the cylindrical portion to enlarge the diameter of the opening portion and bent at a bent portion to form an outer surface parallel with an opening end surface of the opening portion, and a compressed portion with at least a portion of the overlapping portion compressed in a direction perpendicular to the opening end surface of the opening portion.

The opening structure of the fuel tank may further include an annular member disposed around the opening portion to be in contact with the overlapping portion and the cylindrical portion.

The compressed portion may provide an annular groove placed outward or inward of the opening portion in a radial direction of the cylindrical portion.

Preferably, the plastic layers includes at least an outer layer, an inner layer and an intermediate layer, and the outermost end of the intermediate layer is positioned at the compressed portion.

Preferably disposed around the opening portion is an annular member with a step portion formed inward of the annular member in a radial direction thereof to contact with at least the compressed portion.

The bent portion may be formed with a lifted wall portion extending parallel with the side surface of the cylindrical portion.

A method for producing a fuel tank by forming a fuel tank wall with a plurality of plastic layers through blow molding, and forming an opening portion to be integral with the fuel tank wall may include the steps of forming a cylindrical portion extended from the opening portion outward of the fuel tank wall, when the fuel tank wall is formed by blow molding, forming at least a potion of the cylindrical portion to be bulged outward thereof in a radial direction thereof, to provide a bulged portion, pressing the bulged portion to form a bent portion bent at the outward of the opening portion in a radial direction thereof, to form an overlapping portion extended from an end of the cylindrical portion to form an outer surface parallel with an opening end surface of the opening portion, and compressing at least a portion of the overlapping portion to be compressed, to produce a compressed portion.

In the method as described above, the compressed portion may be formed outward of the opening portion in a radial direction of the cylindrical portion. Or, it may be formed inward of the opening portion in a radial direction of the cylindrical portion.

In the method as described above, the plastic layers may include at least an outer layer, an inner layer and an intermediate layer, and the outermost end of the intermediate layer may be positioned at the compressed portion.

In the method as described above, an annular member having a step portion formed inward of the annular member in a radial direction thereof to contact with at least the compressed portion may be disposed around the opening portion.

### BRIEF DESCRIPTION OF THE DRAWINGS

The above stated object and following description will become readily apparent with reference to the accompanying drawings, wherein like reference numerals denote like elements, and in which:
FIG.1 is a cross sectional view of a part of an opening structure of a fuel tank according to an embodiment of the present invention;
FIG.2 is an enlarged cross sectional view of a part of the opening structure of the fuel tank according to an embodiment of the present invention;
FIG.3 is a plan view of an annular member for use in the opening structure of the fuel tank according to an embodiment of the present invention;
FIG.4 is a cross sectional view of an annular member for use in the opening structure of the fuel tank according to an embodiment of the present invention;
FIG.5 is a cross sectional view illustrating a bulging step for forming the opening structure of the fuel tank according to an embodiment of the present invention;
FIG.6 is a cross sectional view illustrating a compressing step for forming the opening structure of the fuel tank according to an embodiment of the present invention;
FIG.7 is an enlarged cross sectional view of a part of an opening structure of a fuel tank according to another embodiment of the present invention;
FIG.8 is an enlarged cross sectional view of a part of an opening structure of a fuel tank according to a further embodiment of the present invention;
FIG.9 is an enlarged cross sectional view of a part of an opening structure of a fuel tank according to a yet further embodiment of the present invention; and
FIG.10 is a cross sectional view of an opening structure of a fuel tank according to a yet further embodiment of the present invention;
FIG.11 is an enlarged cross sectional view of a part of the opening structure according to the embodiment as shown in FIG.10;
FIG.12 is an enlarged cross sectional view of another example of a part of the opening structure according to the embodiment as shown in FIG.10;
FIG.13 is a plan view of the opening structure according to the embodiment as shown in FIG.10;
FIG.14 is an enlarged cross sectional view of a part of a die for forming the opening structure according to the embodiment as shown in FIG.10;
FIG.15 is a cross sectional view illustrating a bulging step for forming the opening structure according to the embodiment as shown in FIG.10; and
FIG.16 is a cross sectional view illustrating a compressing step for forming the opening structure according to the embodiment as shown in FIG.10.

### DESCRIPTION OF THE PREFERRED EMBODIMENTS

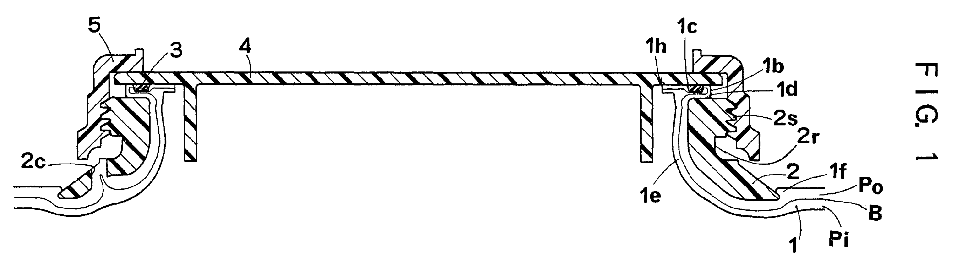

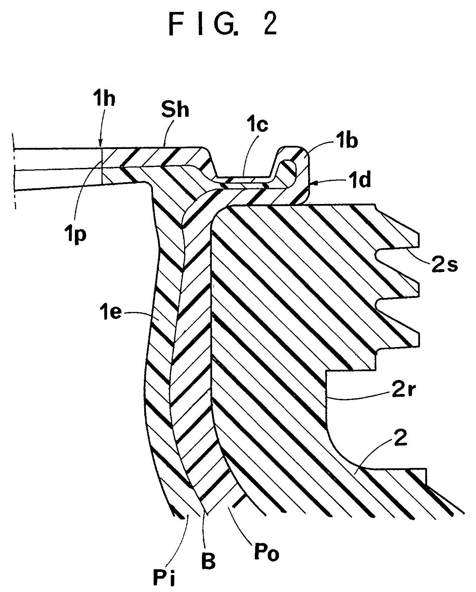

Referring to FIG.1, there is illustrated an opening structure of a fuel tank according to an embodiment of the present invention, a part of which is sectioned and enlarged in FIG.2. According to the present embodiment, a fuel tank wall 1 is formed with a plastic member having a plurality of layers through blow molding, and an opening portion 1h is formed integrally with the fuel tank wall 1. A method for producing it will be explained later.

As shown in FIGS.1 and 2, in the vicinity of the opening portion 1h, there are formed a cylindrical portion 1e which is extended from the opening portion 1h outward of the fuel tank wall 1, and an overlapping portion 1d which is extended from an end of the cylindrical portion 1e to enlarge the diameter of the opening portion 1h and bent at a bent portion 1b to form an outer surface parallel with an opening end surface Sh of the opening portion 1h. And, at least a portion of the overlapping portion 1d is compressed in a direction perpendicular to the opening end surface Sh of the opening portion 1h, to form a compressed portion 1c. In FIG.1, hatching to the plastic member constituting the fuel tank wall 1 is omitted to show the structure clearly.

As illustrated in FIG.2, the plastic member constituting the fuel tank wall 1 is the one with multiple layers, that includes an outer layer Po and an inner layer Pi, both of which are formed by the strength holding member, and an intermediate layer B which is formed with the barrier material and disposed between them, to be bound together by adhesive plastics. As for the strength holding member employed in the present embodiment, ultra high polymeric (high density) polyethylene is used. As for the barrier material, EVOH (i.e., plastic with ethylene and vinylalcohol co-polymerized) is used, for example. According to the present invention, however, the materials are not limited to those as described above, but may be employed any materials which can protect the fuel of gasoline or the like from being passed, to provide effective gas-barrier property.

According to the present embodiment, the bent portion 1b is bent inward (toward the opening) as shown in FIG.2, so that even if the fuel passed through the inner layer Pi, it could be blocked by the intermediate layer B at the bent portion 1b, effectively. And, the compressed portion 1c is formed to provide an annular groove, where the thickness of the outer layer Po is formed relatively thin, comparing with the thickness at the cylindrical portion 1e. Thus, the thickness of the outer layer Po is formed to be thin at the compressed portion 1c, so that the passage has been made narrow, thereby to provide a resistance when the fuel is introduced from an opening end surface 1p. On the contrary, according to the opening structure without the compressed portion 1c formed therein, the opening end surface (corresponding to "1p" in FIG.2) of the plastic member with multiple layers can be directly communicated with the outer space. Therefore, even in the case where a seal member (not shown) was disposed between a cover member 4 and an annular fixing member 5, the fuel might pass through the outer layer Po. Theoretically, some fuel might be introduced from the opening end surface 1p, to pass through the thin portion of the compressed portion 1c, and reach the bent portion 1b, according to the present embodiment, but the amount of fuel is so small as to be substantially negligible.

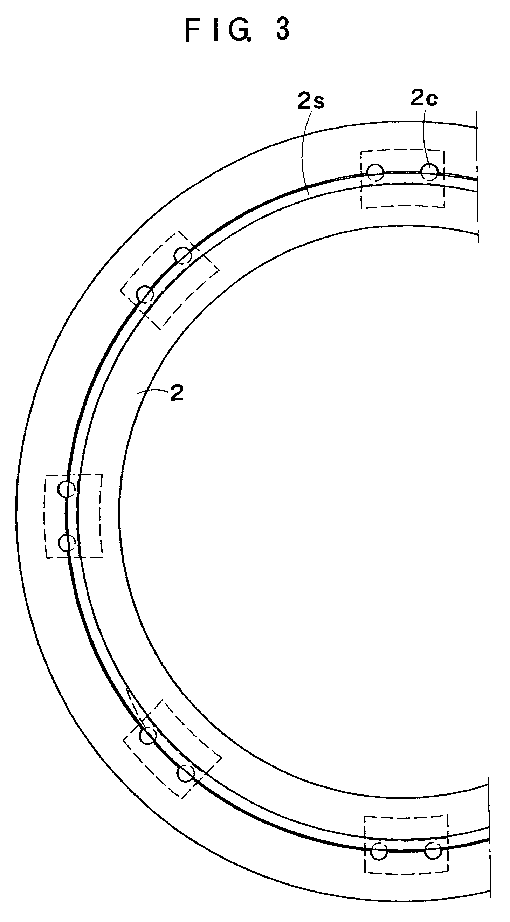

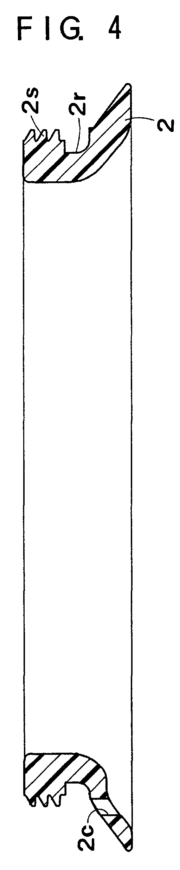

Furthermore, an annular member 2 is placed to surround the opening portion 1h, and fixed to the same with its inner side abutting on the outer side surface of the cylindrical portion 1e, and with its top end surface abutting on the lower surface of the overlapping portion 1d. The annular member 2 is made of plastic, with a c-shaped cross section opened to the outside in a radial direction, and formed as shown in FIGS.3 and 4. That is, a recess 2r is formed around its outer periphery, and opposite end surfaces in its axial direction are formed to be parallel with each other. As shown in FIG.4, the annular member 2 is formed with a threaded portion 2s, on its outer side surface at its upper portion. And, as shown in FIG.3, the annular member 2 is formed with a plurality of communication holes 2c opened in the axial direction, around its whole periphery. The annular member 2 is placed so as to surround the opening portion 1h, and abut on the cylindrical portion 1e and the overlapping portion 1d, so that it is bound with the outer layer Po in a body. In other words, when the annular member 2 is formed, the plastic material is introduced into the communication holes 2c, so that the annular member 2 is secured to the cylindrical portion 1e not to rotate relative thereto. The outer layer Po is extended to cover a portion of the outer peripheral end of the annular member 2, to form an engaging portion 1f.

The opening portion 1h as constituted above has the compressed portion 1c to provide an annular groove, which receives a sealing member 3 made of rubber or the like as shown in FIG.1. Therefore, after the cover member 4 is placed on the sealing member 3, the fixing member 5 having a threaded portion inside thereof is mounted on the cover member 4, and engaged with the threaded portion 2s of the annular member 2. Consequently, the cover member 4 is tightly fixed to the upper surface of the overlapping portion 1d through the sealing member 3. When the fixing member 5 is screwed, the annular member 2 is not rotated, because the annular member 2 is secured to the cylindrical portion 1e not to rotate relative thereto. According to the present embodiment, portions through which the fuel in the tank may be communicated with the outside of the tank, are only the portions where the sealing member 3 abuts on the cover member 4 and overlapping portion 1d, and the portion where the outer layer Po out of the multiple layers was formed relatively thin, when the compressed portion 1c was formed. As a result, the fuel is effectively prevented from passing through the opening portion of the fuel tank wall 1. Particularly, a good sealing property can be ensured, because a profile irregularity has been improved to provide a smooth surface on the bottom surface of the compressed portion 1c.

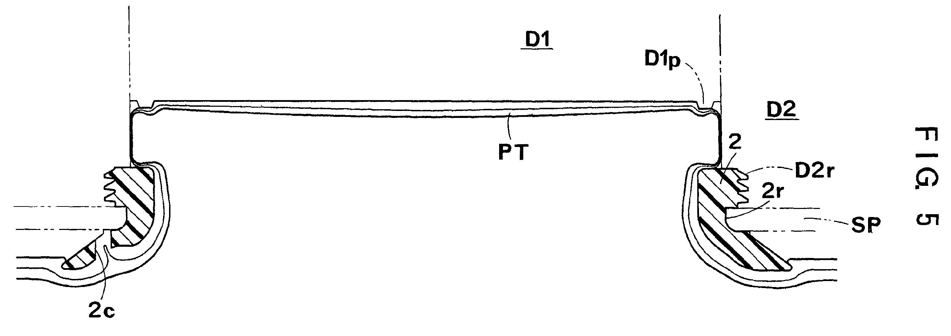

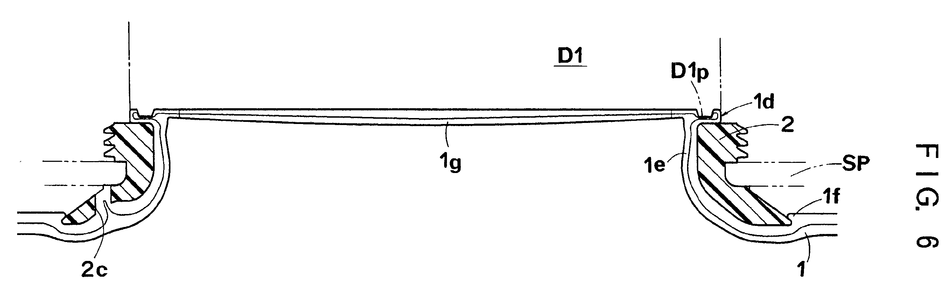

FIGS.5 and 6 illustrate an example of a process for producing the fuel tank having the opening structure as described above. At the outset, according to a forming process as shown in FIG.5, placed between dies D1 and D2 is a multi-layer parison PT made of the plastic member with multiple layers. As shown by two-dot chain lines in FIG.5, the die D1 is supported to move perpendicularly to the die D2. The dies D1 and D2 are formed insides thereof with a protrusion D1p and a recess D2r, respectively. The protrusion D1p is formed to provide the compressed portion 1c as shown in FIG.2, and the recess D2r is formed to receive the annular member 2. Furthermore, a spacer SP is disposed to move back and forth perpendicularly to the axis of the die D1 (i.e., the axis of the opening portion 1h). The spacer SP is adapted to hold the annular member 2 within the recess 2r of the annular member 2 in a pressing process. And, the spacer SP is adapted to move perpendicularly to the axis of the die D1 in accordance with a movement of the die D1. Also, it is so arranged that the air pressure or hydraulic pressure is supplied into the multi-layer parison PT through a conduit (not shown).

Accordingly, with the air pressure or hydraulic pressure introduced into the multi-layer parison PT, the die D1 is moved relative to the die D2 toward the annular member 2. Simultaneously, in accordance with the movement of the die D1, the spacer SP is moved in the direction perpendicular to the axis of the die D1, and held in the recess 2r of the annular member 2. As a result, the multi-layer parison PT is bulged outwardly as shown in FIG.5, while the portion abutting on the annular member 2 is restricted from being bulged outwardly to form the cylindrical portion 1e. Furthermore, the bent portion 1b and the overlapping portion 1d are formed accurately, as shown in FIG.6. Also, the overlapping portion 1d is compressed by the protrusion D1p of the die D1 to form the compressed portion 1c. At the same time, formed is a cover portion 1g as shown in FIG.6, which will be removed later.

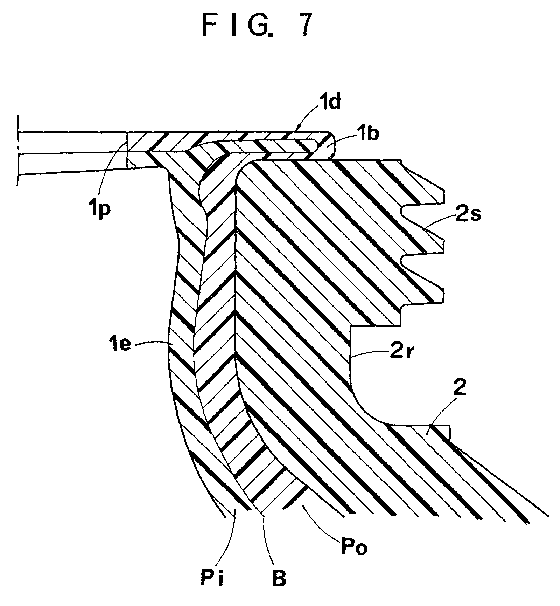

FIG.7 illustrates the opening structure of the fuel tank according to another embodiment of the present invention, wherein all of the overlapping portion 1d is compressed to form the overlapping portion 1d as a whole into the compressed portion. According to this embodiment, therefore, the profile irregularity of the outer surface (upper surface in FIG.7) of the overlapping portion 1d is improved to provide a smooth surface, so that a good sealing property can be obtained. Furthermore, if the profile irregularity of the lower surface of the cover member 4 is proper, a good sealing property can be obtained without any sealing member.

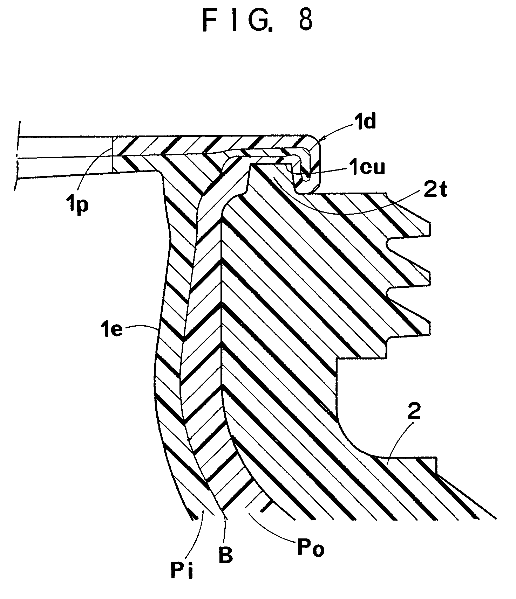

FIG.8 illustrates the opening structure of the fuel tank according to a further embodiment of the present invention, wherein the annular member 2 is formed on its upper surface with a protrusion 2t, so that when the overlapping portion 1d is compressed, a compressed portion 1cu is formed on its lower surface. According to this embodiment, thickness of the outer layer Po is made thinner at the compressed portion 1cu to narrow the passage, whereby the resistance is applied to the fuel when introduced from the opening end surface 1p. Also, the profile irregularity of the outer surface (upper surface in FIG.8) of the overlapping portion 1d above the compressed portion 1cu is improved to provide a smooth surface, so that a good sealing property can be obtained.

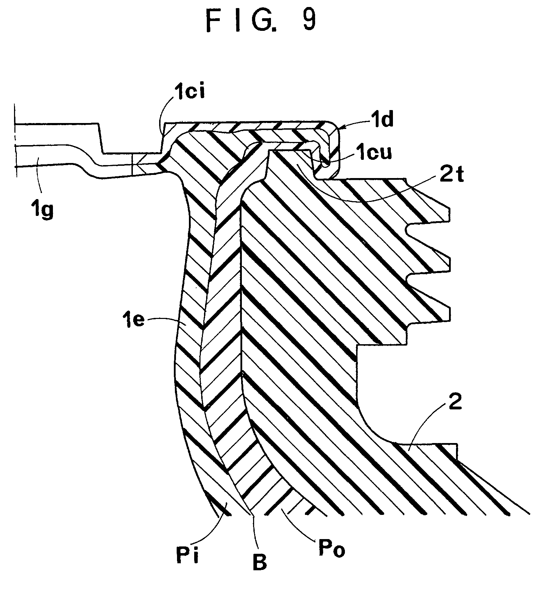

FIG.9 illustrates the opening structure of the fuel tank further modified to the embodiment as shown in FIG.8, wherein the cover portion 1g remained after the forming process can be removed easily. When compressed, a compressed portion 1ci is formed on the overlapping portion 1d at the inner side of the opening portion 1h in its radial direction. By applying shearing force onto the thin compressed portion 1ci, the cover portion 1g can be removed easily.

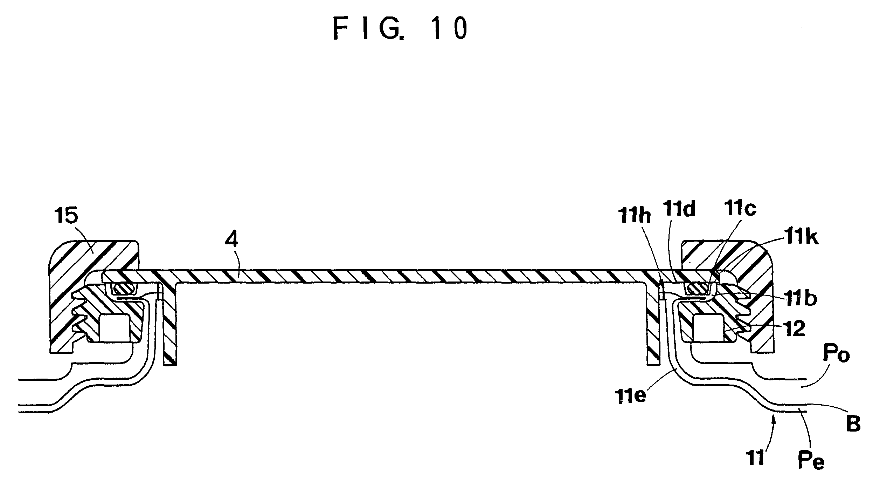

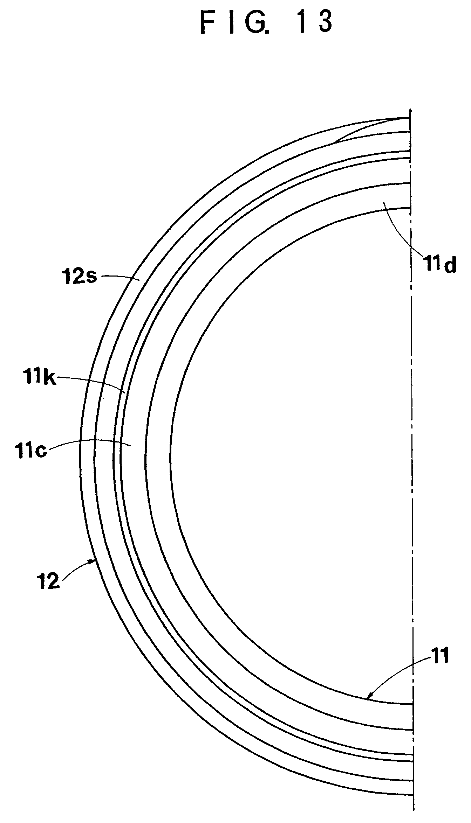

Next will be explained about a yet further embodiment of the present invention with reference to FIGS.10-16, wherein the outermost end of the intermediate layer B is positioned at the compressed portion 1c. In FIGS.10-16, the elements which are substantially the same as those shown in FIGS.1-9 are designated by the same reference numerals as the numerals in FIGS.1-9. Referring to FIGS.10-13, the fundamental structure of the present embodiment is substantially the same as that shown in FIGS.1 and 2, except for the position of the outermost end of the intermediate layer B, and the configurations of fuel tank wall 11 (and elements thereof), annular member 12 (and elements thereof) and annular fixing member 15, which are equivalent to those described originally, and designated by corresponding reference numerals with ten (10) preceding them.

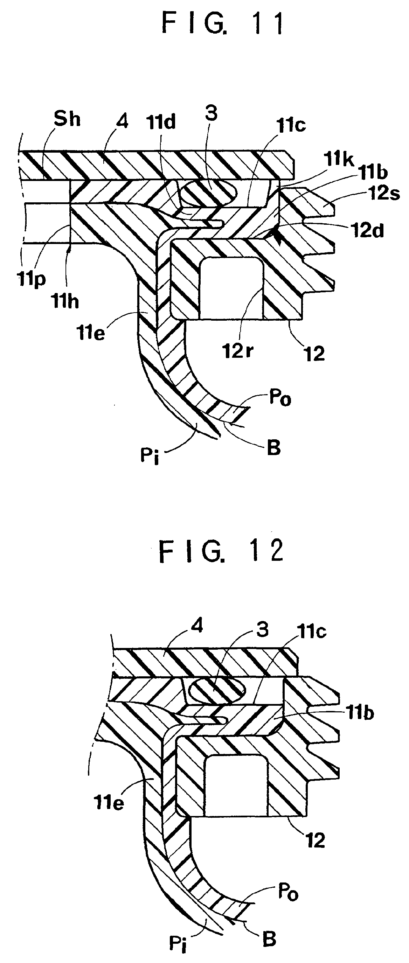

As shown in FIGS.10 and 11, the outermost end of the intermediate layer B is positioned at a compressed portion 11c. And, a lifted wall portion 11k is formed to extend from a bent portion 11b in parallel with the side surface of a cylindrical portion 11e. Consequently, an annular groove is formed on the compressed portion 11c inside of the lifted wall portion 11k. On the contrary, as shown in FIG.12, a step which is formed when the wall 11 is compressed, without forming the lifted wall portion 11k, may serve as the compressed portion 11c to open outward. The annular member 12 is placed to surround the opening portion 11h made of the plastic member forming the fuel tank wall 11, and fixed to the same. The annular member 12 is made of plastic, with its inner side abutting on the outer side surface of the cylindrical portion lie, and with its upper end surface abutting on the lower surface of the overlapping portion 11d. And, the annular member 12 is formed at its inside with a step portion 12d to abut on the bent portion 11b (and the lifted wall portion 11k as shown in FIG.11 in this embodiment). The annular member 12 is formed at its outside with a threaded portion 12s, and formed with a recess 12r on one end surface in its axial direction (i.e., lower end surface as shown in FIG.11).

With respect to the opening portion 11h as constituted above, the compressed portion 11c provides an annular groove, which receives the sealing member 3 as shown in FIG.11. Therefore, after the cover member 4 is placed on the sealing member 3, the annular fixing member 15 having a threaded portion inside thereof is mounted on the cover member 4, and engaged with the threaded portion 12s of the annular member 12. Consequently, the cover member 4 is tightly fixed to the upper surface of the compressed portion 11c through the sealing member 3. According to the present embodiment, portions through which the fuel in the tank may be communicated with the outside of the tank, are only the portions where the sealing member 3 abuts on the cover member 4 and compressed portion 11c, and the portion where the outer layer Po out of the multiple layers was formed relatively thin, when the compressed portion 11c was formed, and particularly, the outermost end of the intermediate layer B is positioned at a compressed portion 11c, so that a passage is formed narrow. As a result, the fuel is effectively prevented from passing through the opening portion of the fuel tank 11. Additionally, a good sealing property can be ensured, because a profile irregularity has been improved to provide a smooth surface on the bottom surface of the compressed portion 11c.

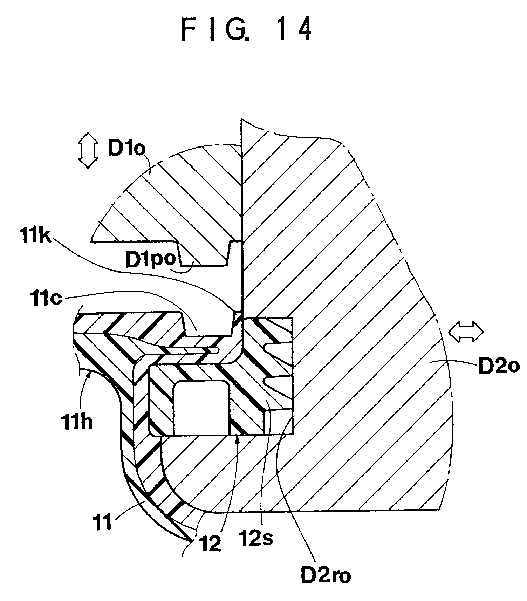

FIG.14 illustrates dies for use in producing the fuel tank having the opening structure as shown in FIGS.10 and 11, and FIGS.15 and 16 illustrate an example of the process for producing it. In the following description, structural elements of dies equivalent to those described originally are designated by corresponding reference numerals with (o) following them. As shown in FIG.14, a die D1o is supported to move vertically, while a die D2o is supported to move horizontally. The dies D1o and D2o are formed insides thereof with a protrusion D1po and a recess D2ro, respectively. The protrusion D1po is formed to provide the compressed portion 11c as shown in FIG.11, and the recess D2ro is formed to receive the threaded portion 12s of the annular member 12. In FIG.14, the formed or finished opening portion 11h of the fuel tank wall 11 is shown.

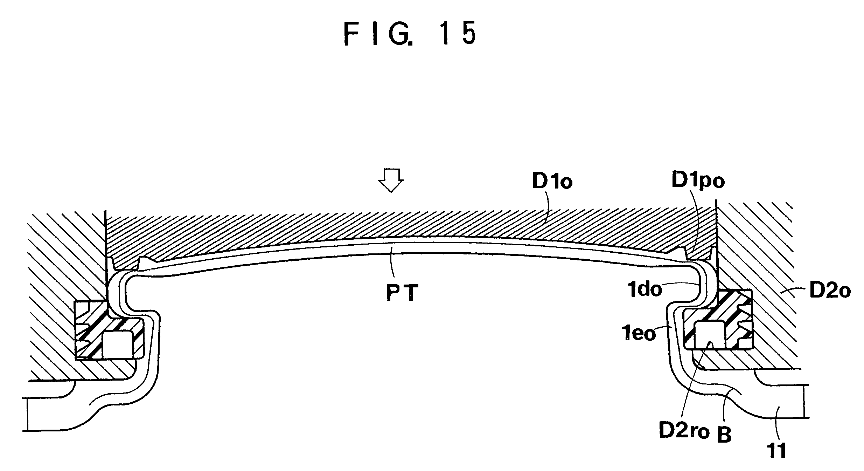

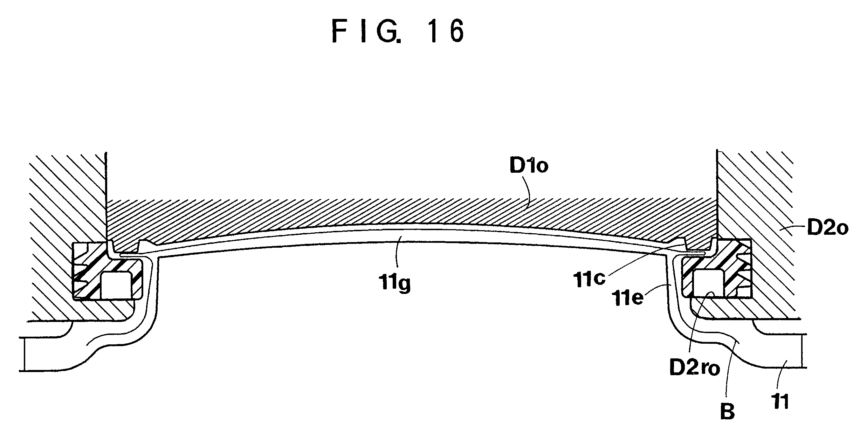

In a forming process as shown in FIG.15, after the annular member 12 is placed between the dies D1o and D2o, the multi-layer parison PT made of the plastic member with multiple layers (three layers in this embodiment). And, it is so arranged that the air pressure or hydraulic pressure is supplied into the multi-layer parison PT. Accordingly, with the air pressure or hydraulic pressure introduced into the multi-layer parison PT, the die D1o is moved relative to the die D2o toward the annular member 12 as indicated by a blank arrow in FIG.15. As a result, the multi-layer parison PT is bulged outwardly as shown in FIG.15, while the portion abutting on the annular member 12 is restricted from being bulged outwardly to form the cylindrical portion 11e. Furthermore, the bent portion 11b and the overlapping portion 11d are formed accurately, as shown in FIG.16. Also, the overlapping portion 11d is compressed by the protrusion D1po of the die D1o to form the compressed portion 11c and the lifted wall portion 11k. At the same time, formed is a cover portion 11g as shown in FIG.16, which will be removed later.

The present invention is directed to an opening structure of a fuel tank having a fuel tank wall made of a plurality of plastic layers with an opening portion formed to be integral with the fuel tank wall. The opening structure includes a cylindrical portion extended from the opening portion outward of the fuel tank wall, an overlapping portion extended from an end of the cylindrical portion to enlarge the diameter of the opening portion and bent at a bent portion to form an outer surface parallel with an opening end surface of the opening portion, and a compressed portion with at least a portion of the overlapping portion compressed in a direction perpendicular to the opening end surface of the opening portion. The opening structure may further include an annular member which is disposed around the opening portion to be in contact with the overlapping portion and the cylindrical portion. The plastic layers may include at least an outer layer, an inner layer and an intermediate layer, and the outermost end of the intermediate layer may be positioned at the compressed portion.

## Claims

1. An opening structure of a fuel tank having a fuel tank wall made of a plurality of plastic layers, with an opening portion formed to be integral with said fuel tank wall, comprising:
a cylindrical portion extended from said opening portion outward of said fuel tank wall;
an overlapping portion extended from an end of said cylindrical portion to enlarge the diameter of said opening portion and bent at a bent portion to form an outer surface parallel with an opening end surface of said opening portion; and
a compressed portion with at least a portion of said overlapping portion compressed in a direction perpendicular to the opening end surface of said opening portion.

2. The opening structure of the fuel tank according to claim 1, further comprising an annular member disposed around said opening portion to be in contact with said overlapping portion and said cylindrical portion.

3. The opening structure of the fuel tank according to claim 1, wherein said compressed portion provides an annular groove placed outward of said opening portion in a radial direction of said cylindrical portion.

4. The opening structure of the fuel tank according to claim 1, wherein said compressed portion provides an annular groove placed inward of said opening portion in a radial direction of said cylindrical portion.

5. The opening structure of the fuel tank according to claim 1, wherein said plastic layers includes at least an outer layer, an inner layer and an intermediate layer, and wherein the outermost end of said intermediate layer is positioned at said compressed portion.

6. The opening structure of the fuel tank according to claim 5, further comprising an annular member disposed around said opening portion, said annular member having a step portion formed inward of said annular member in a radial direction thereof to contact with at least said compressed portion.

7. The opening structure of the fuel tank according to claim 6, wherein said bent portion is formed with a lifted wall portion extending parallel with the side surface of said cylindrical portion.

8. The opening structure of the fuel tank according to claim 5, wherein said bent portion is formed with a lifted wall portion extending parallel with the side surface of said cylindrical portion.

9. A method for producing a fuel tank by forming a fuel tank wall with a plurality of plastic layers through blow molding, and forming an opening portion to be integral with said fuel tank wall, comprising:
forming a cylindrical portion extended from said opening portion outward of said fuel tank wall, when said fuel tank wall is formed by blow molding;
forming at least a potion of said cylindrical portion to be bulged outward thereof in a radial direction thereof, to provide a bulged portion;
pressing said bulged portion to form a bent portion bent at the outward of said opening portion in a radial direction thereof, to form an overlapping portion extended from an end of said cylindrical portion to form an outer surface parallel with an opening end surface of said opening portion; and
compressing at least a portion of said overlapping portion to be compressed, to produce a compressed portion.

10. The method according to claim 9, wherein said compressed portion is formed outward of said opening portion in a radial direction of said cylindrical portion.

11. The method according to claim 9, wherein said compressed portion is formed inward of said opening portion in a radial direction of said cylindrical portion.

12. The method according to claim 9, wherein the blow molding is performed, with an annular member placed around said opening portion, to form said cylindrical member inside of said annular member.

13. The method according to claim 12, wherein said compressed portion is formed outward of said opening portion in a radial direction of said cylindrical portion.

14. The method according to claim 12, wherein said compressed portion is formed inward of said opening portion in a radial direction of said cylindrical portion.

15. The method according to claim 9, wherein said plastic layers includes at least an outer layer, an inner layer and an intermediate layer, and wherein the outermost end of said intermediate layer is positioned at said compressed portion.

16. The method according to claim 15, wherein an annular member disposed around said opening portion, said annular member having a step portion formed inward of said annular member in a radial direction thereof to contact with at least said compressed portion.

17. The method according to claim 16, wherein said bent portion is formed with a lifted wall portion extending parallel with the side surface of said cylindrical portion.

18. The method according to claim 15, wherein said bent portion is formed with a lifted wall portion extending parallel with the side surface of said cylindrical portion.
